# EUROPÄISCHE PATENTSCHRIFT

(11) **EP 3 302 913 B1**
(45) Veröffentlichungstag und Bekanntmachung des Hinweises auf die Patenterteilung: **21.06.2023**
(21) Anmeldenummer: 16729799.3
(22) Anmeldetag: 25.05.2016
(51) Int. Cl.: B29C 33/38, B29C 43/02, B29C 59/02, G01Q 30/20

(54) **VORRICHTUNG UND VERFAHREN ZUM ERZEUGEN EINER ABFORMUNG VON OBERFLÄCHENEIGENSCHAFTEN**
DEVICE AND METHOD FOR PRODUCING A MOULDING OF SURFACE PROPERTIES
DISPOSITIF ET PROCÉDÉ POUR RÉALISER UN MOULAGE DE CARACTÉRISTIQUES DE SURFACE

(30) Priorität: 27.05.2015 DE 102015108327
(43) Veröffentlichungstag der Anmeldung: 11.04.2018
(73) Patentinhaber: Technische Universität Darmstadt, 64289 Darmstadt (DE)
(72) Erfinder: HEIM, Lars-Oliver, 64404 Bickenbach (DE); GOLOVKO, Dmytro, 72574 Bad Urach (DE)
(74) Vertreter: Habermann Intellectual Property Partnerschaft von Patentanwälten mbB
(86) Internationale Anmeldenummer: PCT/EP2016/061858
(87) Internationale Veröffentlichungsnummer: WO 2016/189064

(56) Entgegenhaltungen:
- JP-A- 2008 279 772
- JP-A- 2010 287 829
- US-A1- 2013 037 981

## Beschreibung

Die Erfindung betrifft eine Vorrichtung gemäß Anspruch 1 und ein Verfahren gemäß Anspruch 12.

Die Erfindung betrifft eine Vorrichtung zum Erzeugen einer Abformung von Oberflächeneigenschaften mit einem Gehäuse, mit einem an oder in dem Gehäuse gelagerten verlagerbaren und auf die Oberfläche andrückbaren Druckstempel, der einen Rohlingträger mit einer an die Oberfläche andrückbaren Druckfläche aufweist, an der ein Abformrohling mit einer Abformschicht aus einem aushärtbaren Material lösbar festlegbar ist, und mit einer an oder in dem Gehäuse angeordneten Aushärteeinrichtung, mit welcher das aushärtbare Material des Abformrohlings während des Andrückens an die Oberfläche ausgehärtet werden kann.

Es sind verschiedene Verfahren zur Untersuchung von Oberflächeneigenschaften bekannt. Mit geeigneten Sonden oder mit einer Bestrahlung mit Teilchen bzw. mit elektromagnetischer Strahlung können hochauflösende Abbildungen einer Oberflächentopographie erzeugt werden. Weiterhin können Visualisierungen von Oberflächeneigenschaften wie beispielsweise einer Magnetisierung, einer elektrischen Ladungsverteilung oder von einer chemischen Zusammensetzung bzw. von chemischen Eigenschaften erzeugt werden. Einige Untersuchungsmethoden sind dabei zerstörungsfrei und beeinträchtigen die zu untersuchende Oberfläche nicht. Andere Untersuchungsmethoden erfordern eine erhebliche Wechselwirkung mit der zu untersuchenden Oberfläche und verändern deren Eigenschaften oder Struktur.

Die Rasterkraftmikroskopie ermöglicht eine zerstörungsfreie und hochauflösende Abbildung einer Topographie einer Oberfläche. Allerdings muss die mit der Rasterkraftmikroskopie untersuchte Oberfläche mit einer elastisch gelagerten Messsonde hochauflösend abgetastet werden, wofür eine lange Messdauer von üblicherweise mehreren Minuten pro Abbildung erforderlich ist. Die für die Oberflächenanalyse vorgesehene Oberfläche muss in den Erfassungsbereich der Messsonde gebracht werden. Vergleichbare Anforderungen und Einschränkungen hinsichtlich der für die Analyse geeigneten und ausreichend zugänglichen Oberflächen gelten auch für andere optische, bzw. mikroskopische Untersuchungsmethoden oder für spektroskopische Analysen.

Um die Untersuchung von schwer zugänglichen Oberflächenbereichen zu ermöglichen sind aus der Praxis verschiedene Verfahren zur Erzeugung einer Abformung einer Oberflächentopographie bekannt. Eine Weichmetallfolie kann auf die zu untersuchende Oberfläche angedrückt werden, um die Oberflächentopographie abzuformen. Anschließend kann die abgeformte Weichmetallfolie beispielsweise mit optischen Mikroskopen oder mit einem Rasterkraftmikroskop analysiert werden, um Abbildungen der Oberflächentopographie der zu analysierenden Oberfläche zu erzeugen.

Es ist ebenfalls aus der Praxis bekannt, ein aushärtendes Material auf eine Oberfläche aufzutragen, und nach einem Aushärtevorgang einen auf diese Weise erzeugten Abguss oder Abdruck von der Oberfläche wieder zu lösen, wobei die dadurch erhaltene Abformung eine möglichst wirklichkeitsgetreue Negativform der Oberflächentopographie bildet. Derartige Verfahren, mit denen eine Abformung einer strukturierten Oberfläche erzeugt werden kann, sind beispielsweise in JP 2010 287 829 A, US 2013/037981 A1 oder JP 2008 279772 A beschrieben.

Bei einer Verwendung von aus zwei Komponenten zusammengesetzten aushärtenden Materialien ist üblicherweise eine lange Aushärtedauer notwendig. Es ist ebenfalls aus der Praxis bekannt, flüssige oder als Film, bzw. als Folie ausgebildete Polymermaterialien auf der Oberfläche anzuordnen, die beispielsweise durch Wärme oder Bestrahlung aktiviert werden können und durch Vernetzung aushärten, um die Oberflächentopographie abzuformen.

Das manuelle Auftragen des aushärtbaren Polymermaterials auf der Oberfläche ist arbeits- und kostenintensiv. Zudem lässt sich ein derartiger Abformvorgang kaum ausreichend präzise reproduzieren, sodass beispielsweise vergleichende Oberflächenanalysen, die in zeitlichen Abständen über einen längeren Zeitraum durchgeführt werden, nicht oder nur mit einem erheblichen Aufwand möglich sind.

Die derzeit bekannten aushärtbaren Polymermaterialien ermöglichen regelmäßig nur eine Abformung der Oberflächentopographie, also der dreidimensionalen Strukturierung der abzuformenden Oberfläche. Es wäre vorteilhaft, wenn neben der Oberflächentopographie auch andere Oberflächeneigenschaften mit einer Abformung abgebildet und für anschließende Messungen und Analysen zur Verfügung gestellt werden können.

Es wird deshalb als eine Aufgabe der vorliegenden Erfindung angesehen, eine Vorrichtung zum Erzeugen einer Abformung einer Oberflächeneigenschaft so auszugestalten, dass mit geringem Aufwand möglichst zuverlässig und reproduzierbar eine Abformung einer Oberfläche, bzw. einer Oberflächeneigenschaft durchgeführt werden kann. Zudem ist es wünschenswert, wenn bei Bedarf bereits während der Erzeugung der Abformung zusätzliche Kenngrößen für Oberflächeneigenschaften ermittelt werden können.

Diese Aufgabe wird erfindungsgemäß dadurch gelöst, dass das Gehäuse für eine manuelle Verwendung und Handhabung angepasst ist und die Vorrichtung zum Erzeugen einer Abformung auf einer abzuformenden Oberfläche aufstellbar ist. Mit der erfindungsgemäßen Vorrichtung kann ein vorgefertigter Abformrohling in einfacher Weise und reproduzierbar an eine Oberfläche angedrückt werden, um mit einer Abformschicht aus einem aushärtbaren Material eine Abformung einer Oberfläche durchzuführen. Der Abformrohling ist dabei als Verbrauchsmaterial für eine einmalige Abformung einer Oberfläche vorgesehen, während die erfindungsgemäße Vorrichtung wiederverwendet und zur Erzeugung einer großen Anzahl von Abformungen mit jeweils neuen Abformrohlingen verwendet werden kann. Der gesondert hergestellte Abformrohling wird zweckmäßigerweise vor Beginn des Abformverfahrens an dem Rohlingträger festgelegt, mit dem Rohlingträger an die Oberfläche angedrückt und nach dem Aushärten des an die Oberfläche angedrückten aushärtenden Materials des Abformrohlings von dem Rohlingträger wieder gelöst.

Das Gehäuse ist für eine manuelle Verwendung und Handhabung angepasst. Das Gehäuse kann beispielsweise näherungsweise zylinderförmig ausgestaltet sein und mit einer Hand einfach zu ergreifenden, bzw. umgreifenden Durchmesser von einigen Zentimetern bis etwa 10 oder 15 Zentimetern aufweisen. Das Gehäuse kann auch eine nahezu beliebig andere Formgebung aufweisen und beispielsweise halbkugelförmig oder quaderförmig ausgebildet sein. Der Druckstempel kann linear verschiebbar oder um eine Schwenkachse verschwenkbar an oder in dem Gehäuse gelagert sein. Der Druckstempel kann sowohl manuell als auch mit Hilfe einer von einer Federeinrichtung aufgebrachten Federkraft oder beispielsweise elektrisch mit einem Aktor an die Oberfläche angedrückt werden.

Eine derartige Vorrichtung kann in verschiedenen Anwendungsbereichen wie beispielsweise bei der Rasterwalzeninspektion, bei der Qualitätssicherung von Produktionsverfahren in der Halbleiterindustrie, bei prozessbegleitenden Überprüfungen wie etwa bei thermischen Spritzverfahren oder im Rahmen von Forschung und Entwicklung bei Prototypen und Analysen eingesetzt werden, um möglichst zuverlässig und präzise die zu untersuchende Oberfläche abformen und für anschließende Analyseverfahren bereithalten zu können. Die Vorrichtung sollte möglichst ergonomisch geformt sein und über eine ausreichend robuste Mechanik verfügen, um über einen langen Verwendungszeitraum eine große Anzahl von Abformungen mit hoher Präzision und Reproduzierbarkeit durchführen zu können.

Durch die Verwendung der Vorrichtung zur Erzeugung einer Abformung können Oberflächen untersucht werden, die mit herkömmlichen Mitteln und Verfahren nicht standardisiert analysiert werden können. So können schwer zugängliche Oberflächen wie beispielsweise ein Innenraum eines Verbrennungsmotors oder auch unebene Oberflächenkonturen rasch und zuverlässig abgeformt werden. Die zu untersuchende Oberfläche muss nicht in eine Messvorrichtung gebracht werden. Die Oberfläche muss lediglich für die Zeitdauer des Abformvorgangs zugänglich sein, so dass eine Oberfläche einer Produktionsmaschine nur kurzzeitig für die Abformung benötigt wird und kostenintensive Stillstandszeiten der Produktionsmaschine minimiert werden können, da die zeitaufwendige Analyse der Oberfläche an der Abformung durchgeführt werden kann. Es können auch durch mehrere aufeinanderfolgend erzeugte Abformungen zeitliche Veränderungen einer Oberfläche analysiert und die Abformungen für nachfolgende Untersuchungen archiviert werden.

Durch den beispielsweise manuell oder mit Hilfe einer Federkraft einer Federeinrichtung verlagerbaren und an die Oberfläche andrückbaren Druckstempel kann ein für die Abformung ausreichender und gleichzeitig nicht übermäßig hoher Anpressdruck erzeugt und für die Dauer der Aushärtung des aushärtbaren Materials gleichmäßig aufrechterhalten werden. Eine manuelle Auftragung oder Anbringung einer Abformschicht aus einem aushärtbaren Material ist nicht erforderlich. Die Erzeugung einer Abformung wird dadurch vereinfacht und auch für einen ungeübten Benutzer mit hoher Genauigkeit reproduzierbar. Der Anpressdruck kann beispielsweise in Abhängigkeit von dem verwendeten aushärtbaren Material, aber auch in Abhängigkeit von der abzuformenden Oberfläche und insbesondere von deren Topografie und Benetzungsfähigkeit vorgegeben werden. Der Anpressdruck kann in einzelnen Anwendungen auch sehr gering sein und gegebenenfalls ein nahezu druckloses Kontaktieren des Abformrohlings mit der Oberfläche bewirken.

Durch das Andrücken der Abformschicht an die zu untersuchende Oberfläche werden die für die anschließende Messung und Auswertung maßgeblichen Oberflächeneigenschaften wie beispielsweise eine Topographie der Oberfläche auf die Abformschicht übertragen und durch deren Aushärtung fixiert. Der Aushärtvorgang des aushärtbaren Materials ist zweckmäßigerweise beispielsweise durch eine geeignete Energiezufuhr aktivierbar und nach der Aktivierung rasch durchgeführt und abgeschlossen.

Die Abformschicht besteht zweckmäßigerweise aus einem geeigneten vernetzenden Polymermaterial, das während des Andrückens an die abzuformende Oberfläche die für die Abformung relevanten Eigenschaften wie beispielsweise eine Topographie oder aber eine Magnetisierung oder Hydrophobizität der Oberfläche übernimmt und während des Aushärtens beibehält. Auf diese Weise können neben einer Abtastung und Abbildung der Topographie auch weitere Oberflächeneigenschaften wie beispielsweise die Magnetisierung oder Hydrophobizität der Oberfläche abgeformt und für anschließende Analysen konserviert, bzw. zur Verfügung gestellt werden.

Durch die Verwendung eines geeigneten Materials oder einer geeigneten Materialkombination für die Abformschicht können zusätzlich zu der Oberflächentopographie auch eine weitere Oberflächeneigenschaft oder sogar mehrere weitere Oberflächeneigenschaften abgeformt und für nachfolgende Analysen ohne einen räumlichen Kontakt zu der abgeformten Oberfläche zur Verfügung gestellt werden. Dabei werden beispielsweise auch im Bereich der Oberfläche herrschende elektrische, magnetische oder elektromagnetische Felder sowie Temperaturgradienten oder chemische Eigenschaften als Oberflächeneigenschaften angesehen, die mit der Abformung abgeformt werden können.

Es ist ebenfalls möglich, dass ausgehend von der Abformung eine Kopie der abgeformten Oberfläche hergestellt und diese Kopie der Oberfläche für nachfolgende Messungen und Analysen verwendet wird.

Der Rohlingträger kann aus einem formstabilen Material bestehen oder zumindest eine formstabile Druckfläche bilden. Es ist ebenfalls denkbar, dass der Rohlingträger eine elastische Beschichtung oder ein elastisches Andruckgebilde aufweist, welches die Druckfläche bildet, um beispielsweise einen möglichst gleichmäßigen Anpressdruck des Abformrohlings auf die abzuformende Oberfläche zu ermöglichen. Der Rohlingträger kann auch eine elastische oder flexible Membran aufweisen, die zum Andrücken des Abformrohlings hydraulisch oder pneumatisch in Richtung der abzuformenden Oberfläche ausgelenkt und an die Oberfläche angepresst werden kann, um den dazwischen angeordneten Abformrohling an die Oberfläche anzudrücken. Durch die Erzeugung und Aufrechterhaltung einer hydraulischen oder pneumatischen Druckkraft, die auf die Membran einwirkt, kann der Anpressdruck des Abformrohlings an die Oberfläche präzise und großflächig gleichmäßig vorgegeben werden.

Um eine geneigte Oberfläche besser abformen zu können und eine Anpassung der Abformschicht des Abformrohlings an eine geneigte oder nicht vollständig ebene Oberfläche anpassen zu können ist vorgesehen, dass der Rohlingträger schwenkbar gelagert ist. Auf diese Weise kann erreicht werden, dass auch bei nicht vollständig ebenen Oberflächen ein näherungsweise gleich großer Anpressdruck von dem schwenkbar gelagerten Rohlingträger auf die Abformschicht ausgeübt wird, die an die Oberfläche angedrückt wird.

Vorzugsweise ist vorgesehen, dass der Rohlingträger mindestens zwei relativ zueinander verlagerbare Andrucksegmente aufweist. Zwei relativ zueinander verlagerbare Andrucksegmente können beispielsweise durch ein feststehendes Andrucksegment und ein zweites, verlagerbar gelagertes Andrucksegment realisiert werden. Der Rohlingträger kann auch aus beispielsweise vier oder sieben rechteckigen oder wabenförmigen Andrucksegmenten bestehen, die nebeneinander angeordnet sind und die Druckfläche bilden, an der der Abformrohling festgelegt und durch eine Verlagerung des Druckstempels an die Oberfläche angedrückt werden kann. Die einzelnen Andrucksegmente können jeweils gesondert um eine Schwenkachse oder mit einem Kugelgelenk in alle Richtungen schwenkbar gelagert sein. Die durch die mehreren Andrucksegmente gebildete Druckfläche kann dadurch auch an gekrümmt verlaufende Oberflächen angepasst werden und gegebenenfalls Unebenheiten der abzuformenden Oberfläche ausgleichen.

Falls der Abformrohling vor dem Aushärten der Abformschicht aus dem aushärtbaren Material flexibel oder elastisch ausgestaltet ist, kann durch eine geeignete Ausgestaltung eines in mehrere Andrucksegmente aufgeteilten Rohlingträgers eine individuelle Anpassung des Abformrohlings an eine unebene Oberfläche ermöglicht werden.

Um eine möglichst reproduzierbare Durchführung eines Abformvorgangs zu erleichtern und zu gewährleisten, dass während eines Abformschritts und des dabei bewirkten Aushärtens der an die Oberfläche angedrückten Abformschicht eine unbeabsichtigte Verlagerung der Abformschicht auf der Oberfläche vermieden wird ist vorgesehen, dass die Vorrichtung eine Positioniereinrichtung für den verlagerbaren Druckstempel aufweist. Zu diesem Zweck kann das zylinderförmige oder halbkugelförmige Gehäuse einen ringförmigen Anlageflansch aufweisen, der konzentrisch um den abzuformenden Oberflächenbereich auf die Oberfläche aufgesetzt und beispielsweise klebend in diese Position fixiert werden kann. Bei einer abweichenden Gehäuseform kann der Verlauf des Anlageflanschs abweichen und an die betreffende Gehäuseform angepasst sein. Es ist ebenfalls möglich, dass das Gehäuse längs eines die Druckfläche des Rohlingträgers umgebenden Gehäuserands mehrere konisch sich zu einer Spitze verjüngende Ausformungen aufweist, die jeweils eine näherungsweise punktförmige Aufstandsfläche für das Gehäuse auf der Oberfläche bilden. Durch die zur Oberfläche hin vorspringenden Spitzen wird eine wiederholbare Positionierung und zuverlässige Fixierung des Gehäuses an der abzuformenden Oberfläche erleichtert.

Es ist ebenfalls möglich, dass das Gehäuse seitlich neben der Druckfläche des Rohlingträgers eine oder mehrere Haftflächen oder Saugvorrichtungen oder Bohrungen aufweist, um das Gehäuse haftend, mit Unterdruck ansaugend oder mit Hilfe von geeigneten Befestigungsmitteln wie beispielsweise Schrauben oder Bolzen an der abzuformenden Oberfläche festzulegen.

Einer vorteilhaften Ausgestaltung des Erfindungsgedankens zufolge ist vorgesehen, dass die Vorrichtung eine Kraftmesseinrichtung aufweist, mit welcher eine auf den Druckstempel ausgeübte Zugkraft oder Druckkraft erfasst werden kann. Die Kraftmesseinrichtung kann beispielsweise einen eine erzwungene Verformung erfassender Piezosensor sein. Es ist ebenfalls möglich, dass die Kraftmesseinrichtung ein Verformungselement aufweist, dessen durch die Krafteinwirkung erzwungene Verformung beispielsweise mit Dehnungsmessstreifen erfasst und in ein elektrisches Messsignal umgewandelt werden kann. Die Kraftmesseinrichtung kann so ausgestaltet sein, dass mit der Kraftmesseinrichtung eine Druckkraft, eine Zugkraft oder sowohl Druckkräfte als auch Zugkräfte erfasst werden können, die während des Andrückens des Abformrohlings oder während des Ablösens der ausgehärteten Abformung aufgebracht werden.

Zweckmäßigerweise ist vorgesehen, dass die Kraftmesseinrichtung an einer Führungsstange des Druckstempels angeordnet ist. Die Kraftmesseinrichtung kann dabei unmittelbar benachbart oder in einem Übergangsbereich zu dem Rohlingträger angeordnet sein, um die während des Andrückens des Druckstempels auf die Oberfläche auf den Rohlingträger und über diesen auf die Abformschicht ausgeübten Andruckkräfte möglichst unverfälscht erfassen zu können.

Gemäß einer besonders vorteilhaften Ausgestaltung des Erfindungsgedankens ist vorgesehen, dass die Vorrichtung einen mit einer Verlagerungseinrichtung gelagerten Verformungskörper aufweist, der durch eine Betätigungseinrichtung an die Oberfläche angepresst werden kann, um eine Verformung der Oberfläche zu bewirken. Der Verformungskörper kann beispielsweise ein Stift, ein Konus oder eine Spitze sein, der bei einem ausreichend hohen Anpressdruck in die Oberfläche eintaucht und eine Verformung der Topografie der Oberfläche bewirkt. Die Verlagerungseinrichtung zur Verlagerung des Verformungskörpers kann beispielsweise einen manuell oder automatisiert betätigbare Federkrafteinrichtung aufweisen, die den Verformungskörper mit einer vorgebbaren und gegebenenfalls einstellbaren Federkraft an die Oberfläche anpresst. Die Verlagerungseinrichtung kann auch eine beispielsweise elektromotorische, magnetische oder hydraulische Antriebseinrichtung aufweisen, mit welcher die Verlagerung des Verformungskörpers bewirkt und in Verbindung mit einer geeignet ausgestalteten Kraftmesseinrichtung ein steuerbarer oder ein regelbarer Anpressdruck des Verformungskörpers an die Oberfläche erzeugt wird. Mit dem verlagerbaren Verformungskörper können Verformungen der Oberfläche erzwungen werden, die von der Abformung erfasst und nach dem Ablösen der Abformung ausgewertet werden können, um beispielsweise ergänzende Informationen zu der Härte eines Objekts im Bereich der Oberfläche zu erhalten.

Im Hinblick auf einen möglichst geringen Raumbedarf für die mit einem verlagerbaren Verformungskörper ausgestattete Vorrichtung ist erfindungsgemäß vorgesehen, dass der Verformungskörper in dem Rohlingträger zwischen einer aus dem Rohlingträger über die Druckfläche herausragenden Anpressposition und einer in den Rohlingträger zurückgezogenen, nicht über die Druckfläche herausragenden Ruheposition verlagerbar gelagert ist. Der Verformungskörper kann in diesem Fall innerhalb des Rohlingträgers oder oberhalb des Rohlingträgers beabstandet zu der Oberfläche in der Ruheposition gelagert werden, ohne dass hierfür ein nennenswerter zusätzlicher Raumbedarf entsteht. Um die Oberfläche mit dem Verformungskörper zu verformen kann der Verformungskörper aus dem Rohlingträger heraus verlagert werden und über den Druckstempel in die Oberfläche eingedrückt werden. Dabei muss der Abformrohling entweder erst nach der Verformung der Oberfläche und einer anschließenden Zurückverlagerung des Verformungskörpers in dessen Ruheposition an dem Rohlingträger festgelegt und an die verformte Oberfläche angedrückt werden, oder beispielsweise ringförmig ausgebildet sein und den aus dem Rohlingträger herausragenden Verformungskörper umgeben, der dann auch während des Aushärtens der Abformschicht in die Oberfläche eingedrückt wird und die Verformung der Oberfläche bewirkt. Bei einer derartigen Ausgestaltung der Vorrichtung kann beispielsweise auch die erzwungene Verformung eines elastischen Körpers mit der Abformung erfasst werden, die sich nach einer Entfernung des Verformungskörpers wieder zurückbilden oder erneut verändern würde.

Das aushärtbare Material der Abformschicht ist zweckmäßigerweise so ausgewählt und vorgegeben, dass der Aushärtvorgang des aushärtbaren Materials in geeigneter Weise aktiviert, bzw. in Gang gesetzt und rasch durchgeführt, bzw. abgeschlossen werden kann. Zu diesem Zweck kann die Aushärteinrichtung eine geeignete Aktivierungsenergie oder eine den Aushärtvorgang unterstützende Aushärtungsenergie erzeugen. In Abhängigkeit von dem jeweiligen aushärtbaren Material kann die Aushärteinrichtung beispielsweise Hitze oder Kälte erzeugen oder ein magnetisches bzw. elektrisches Feld erzeugen oder aber elektromagnetische Strahlung erzeugen, mit welchem der Aushärtvorgang aktiviert, bzw. unterstützt werden kann. Das aushärtbare Material weist vorzugsweise eine geringe Viskosität und Oberflächenenergie auf, um eine möglichst detailgetreue Abformung der Oberfläche zu erlauben. Das ausgehärtete Material sollte eine geringe Adhäsion und eine ausreichende Elastizität aufweisen, um nach dem Aushärtvorgang leicht und zerstörungsfrei von der Oberfläche abgelöst werden zu können. In Abhängigkeit von der jeweiligen Oberfläche und den zu ermittelnden Oberflächeneigenschaften kann das ausgehärtete Material auch steif und starr bzw. hochfest verfestigt sein.

Gemäß einer vorteilhaften Ausgestaltung des Erfindungsgedankens ist vorgesehen, dass die Aushärteinrichtung eine Beleuchtungseinrichtung aufweist, mit der elektromagnetische Strahlung emittiert werden kann.

Da eine große Anzahl von vernetzenden Polymehrmaterialien mit unterschiedlichen Eigenschaften bereits im Zusammenhang mit anderen Anwendungsbereichen entwickelt wurden und handelsüblich erhältlich sind, die mit UV-Strahlung aktiviert, bzw. ausgehärtet werden können, ist in vorteilhafter Weise vorgesehen, dass die Beleuchtungseinrichtung UV-Strahlung emittiert. Geeignete Leuchtdioden, die hochenergetische UV-Strahlung emittieren können, sind kostengünstig und mit großer Leuchtstärke erhältlich. Durch die Verwendung von UV-Strahlung für die Aktivierung und Durchführung des Aushärtvorgangs kann eine gegebenenfalls unerwünschte und für die abzuformende Oberfläche nachteilige Erwärmung der Oberfläche reduziert und gegebenenfalls sogar weitestgehend ausgeschlossen werden.

Die Aushärteinrichtung kann insbesondere dann, wenn es sich um eine Beleuchtungseinrichtung handelt, in vorteilhafter Weise in den Rohlingträger integriert sein. So kann der Rohlingträger einen Hohlraum aufweisen, in welchem die Beleuchtungseinrichtung angeordnet ist und der eine für Wärmestrahlung oder UV-Licht durchlässige Abdeckung aufweist, auf der der Abformrohling angeordnet und festgelegt werden kann. Die Abdeckung kann beispielsweise ein transparentes steifes Kunststoffmaterial oder eine flexible Folie sein.

Um eine Anbringung und zuverlässige Festlegung des Abformrohlings an dem Druckstempel zu erleichtern und eine nach dem Aushärtvorgang notwendige Ablösung des Abformrohlings mit der ausgehärteten Abformschicht zu unterstützen ist vorgesehen, dass die Druckfläche des Rohlingträgers eine Haftschicht für die lösbare Festlegung des Abformrohlings aufweist. Die Haftschicht kann beispielsweise durch eine Beschichtung mit einem geeigneten Klebmaterial gebildet werden. Es ist ebenfalls möglich, dass die Druckfläche des Rohlingträgers und eine für die Festlegung an dem Rohlingträger vorgesehene Außenseite des Abformrohlings jeweils mit einem Klettmaterial beschichtet, bzw. überzogen sind.

Für die erfindungsgemäße Vorrichtung kann in vorteilhafter Weise ein Abformrohling mit einer Abformschicht aus einem aushärtbaren Material verwendet werden. Dabei ist die Abformschicht auf einer Trägerschicht angeordnet, mit welcher der Abformrohling an einer Druckfläche eines Rohlingträgers der Vorrichtung festgelegt und nach der Aushärtung des aushärtbaren Materials der Abformschicht wieder von der Druckfläche gelöst werden kann. Die Trägerschicht dient einer mechanischen Stabilisierung und formgebenden Unterstützung der Abformschicht. Das aushärtbare Material der Abformschicht muss deshalb nicht selbst formbeständig oder ausreichend formstabil sein, um auf der Oberfläche angebracht und angedrückt werden zu können. Es können auch viskose und pastöse aushärtbare Materialien verwendet werden, die als eine Beschichtung auf die Trägerschicht aufgebracht und zusammen mit der Trägerschicht an dem Rohlingträger festgelegt werden können.

Das aushärtbare Material der Abformschicht muss weiterhin keine derart hohe Festigkeit aufweisen, dass die Abformschicht auch ohne die Trägerschicht rückstandsfrei von der Oberfläche abgelöst werden könnte. Vielmehr ist lediglich erforderlich, dass die Abformschicht ausreichend stark an der Trägerschicht anhaftet, sodass die Abformschicht während der Anbringung des Abformrohlings an dem Rohlingträger und während des Andrückens des Abformrohlings an die Oberfläche sich nicht unbeabsichtigt von der Trägerschicht ablösen kann. Nach dem Aushärten des aushärtbaren Materials bildet die der abgeformten Oberfläche entsprechend strukturierte Abformschicht üblicherweise einen mechanisch ausreichend stabilen und insbesondere formstabilen Abformkörper, der entweder gemeinsam mit der Trägerschicht oder aber unabhängig von der Trägerschicht von der abgeformten Oberfläche gelöst und für eine nachfolgende Untersuchung gelagert, bzw. einer geeigneten Analyseeinrichtung zugeführt werden kann.

In vorteilhafter Weise ist vorgesehen, dass die Abformschicht zusätzlich zu dem aushärtbaren Material eine weitere Materialkomponente aufweist, mit der zusätzlich zu einer Oberflächentopographie eine weitere Oberflächeneigenschaft abgeformt werden kann. So kann mit der zusätzlichen Materialkomponente beispielsweise ein an der Oberfläche herrschendes magnetisches Feld erfasst und sichtbar bzw. für nachfolgende Analysen zugänglich gemacht werden. Die zusätzliche Materialkomponente könnte aus Eisenspänen bestehen oder Eisenspäne beinhalten, deren Orientierung vor dem Aushärten durch das Magnetfeld im Bereich der Oberfläche beeinflusst und vorgegeben wird und deren Anordnung und Orientierung durch das anschließende Aushärten des aushärtbaren Materials fixiert und für nachfolgende Analysen konserviert wird.

Um die Handhabung des Abformrohlings zu erleichtern ist vorgesehen, dass die Trägerschicht aus einem formstabilen Material besteht. Es ist ebenfalls möglich, dass die Trägerschicht aus einem elastischen Material besteht, um in Verbindung mit einem aus mehreren Andrucksegmenten gebildeten Rohlingträger während eines Andruckvorgangs verformt und an eine unebene Oberfläche angepasst werden zu können.

Insbesondere für eine Verwendung des Abformrohlings mit einer Vorrichtung, die einen verlagerbaren Verformungskörper aufweist, ist es vorgesehen und vorteilhaft, dass der Abformrohling eine Ausnehmung aufweist, die von der Abformschicht aus dem aushärtbaren Material umgeben ist. Der Abformrohling kann beispielsweise ringförmig ausgebildet sein, so dass das aushärtbare Material der Abformschicht eine auch in der Trägerschicht mittig angeordnete Ausnehmung ringförmig umgibt. Der Verformungskörper kann dann bei Bedarf durch die mittige Ausnehmung hindurch gleichzeitig mit dem Abformrohling oder aber vorab an die Oberfläche angepresst werden, um die Oberfläche zu verformen. Da der Abformrohling den Verformungskörper umgibt, kann die durch den Verformungskörper erzeugte Veränderung der Topografie der Oberfläche von allen Seiten bzw. die Kontaktfläche der Oberfläche mit dem Verformungskörper umgebend erfasst werden. Es sind verschiedene Ausgestaltungen des Abformrohlings denkbar und beispielsweise ebenfalls möglich, dass der Abformrohling lediglich eine seitlich in den Abformrohling ragende Ausnehmung oder eine C-förmige bzw. H-förmige Grundfläche aufweist.

Die Erfindung betrifft auch ein Verfahren zum Erzeugen einer Abformung einer Oberfläche oder einer Oberflächeneigenschaft. Erfindungsgemäß ist vorgesehen, dass in einem Andrückschritt ein Abformrohling mit einer Abformschicht aus einem aushärtbaren Material auf einer Druckfläche eines Druckstempel festgelegt und mit dem Druckstempel an die Oberfläche angedrückt wird, dass in einem Abformschritt mit einer Aushärteinrichtung das aushärtbare Material während des Andrückens ausgehärtet wird, und dass in einem Entnahmeschritt der Abformrohling mit der ausgehärteten Abformung der Oberfläche von dem Druckstempel gelöst wird. Durch die Verwendung einer vorangehend beschriebenen Vorrichtung kann dieses Verfahren auch von einer ungeübten Person einfach, schnell und ausreichend präzise durchgeführt werden, um eine reproduzierbare Abformung einer Oberfläche bzw. einer Oberflächeneigenschaft zu erzeugen.

Gemäß einer vorteilhaften Ausgestaltung des Erfindungsgedankens ist vorgesehen, dass das aushärtbare Material der Abformschicht ein mit elektromagnetischer Strahlung aktivierbares vernetzendes Polymer ist und dass in dem Abformschritt das vernetzende Polymer mit einer Beleuchtungseinrichtung mit elektromagnetischer Strahlung bestrahlt wird. In geeigneter Weise aktivierbare vernetzende Polymermaterialien sind in verschiedenen Varianten mit unterschiedlichen Eigenschaften handelsüblich erhältlich und können kostengünstig für die Durchführung des Verfahrens eingesetzt werden. Es können auch speziell für die Erzeugung einer Abformung modifizierte oder mit zusätzlichen Komponenten versehene Polymermaterialien oder andere aushärtende Abformmaterialien verwendet werden.

Zweckmäßigerweise ist vorgesehen, dass das aushärtbare Material der Abformschicht mit UV-Strahlung bestrahlt und dadurch aktiviert, bzw. ausgehärtet wird. Mit geeigneten Leuchtdioden kann eine ausreichend intensive UV-Bestrahlung der Abformschicht erzeugt werden, um den Aushärtvorgang rasch durchführen und abschließen zu können. Derartige Leuchtdioden sind kostengünstig erhältlich. Die Leuchtdioden können energieeffizient betrieben werden und ermöglichen eine von einem Stromnetz unabhängige Energieversorgung, die beispielsweise mit einer geeigneten Akkumulatoreinrichtung zur Verfügung gestellt werden kann.

Die Leuchtdioden können bzw. die Aushärteinrichtung kann seitlich oder konzentrisch den Druckstempel umgebend im Bereich des Rohlingträgers angeordnet sein und durch eine seitliche Einwirkung oder mit einer durch den Rohlingträger hindurch wirkenden Stimulation die Aushärtung der Abformschicht des Abformrohlings aktivieren, bzw. beschleunigen. Es ist ebenfalls möglich, die Aushärteinrichtung, einzelne Komponenten der Aushärteinrichtung oder beispielsweise eine oder mehrere Leuchtdioden in den Rohlingträger des Druckstempels oder in einem anderen Bereich des Druckstempels in diesen zu integrieren.

Gemäß einer vorteilhaften Ausgestaltung des Erfindungsgedankens ist vorgesehen, dass während des Andrückschritts mit einer Kraftmesseinrichtung eine auf den Druckstempel ausgeübte Druckkraft erfasst wird. Auf diese Weise kann der tatsächlich auf den Druckstempel ausgeübte Anpressdruck bestimmt und für nachfolgende Auswertungen der dabei erzeugten Abformung der Oberfläche berücksichtigt werden. Zudem können dadurch Messergebnisse aus mehreren Abformvorgängen einfacher und aussagekräftiger miteinander verglichen werden.

Es ist ebenfalls möglich, mit der Kraftmesseinrichtung den auf den Druckstempel ausgeübten Anpressdruck zu erfassen und für eine geeignete Steuerung oder Regelung des Anpressdrucks zu berücksichtigen. So kann beispielsweise eine Anzeige erfolgen, wenn der mit der Kraftmesseinrichtung erfasste Anpressdruck oberhalb oder unterhalb eines vorgegebenen Schwellenwerts liegt. Bei einer automatisiert betätigbaren Anpresseinrichtung, mit welcher der Druckstempel beispielsweise elektromotorisch oder magnetisch mit einem Anpressdruck beaufschlagt und an die Oberfläche angedrückt werden kann, kann ein von der Kraftmesseinrichtung erzeugtes Kraftmesssignal zur Steuerung oder Regelung der Anpresseinrichtung verwendet werden.

Erfindungsgemäß ist ebenfalls möglich und für die Ermittlung zusätzlicher Informationen vorteilhaft, dass mit einer Kraftmesseinrichtung eine Zugkraft erfasst wird, die auf den Abformrohling ausgeübt wird, während der Abformrohling mit der ausgehärteten Abformung von der Oberfläche gelöst wird. Die Kraft, die für die Ablösung der Abformung von der Oberfläche benötigt wird, kann beispielsweise von dem jeweils verwendeten aushärtbaren Material, bzw. Polymer oder von der dreidimensionalen Oberflächenstrukturierung oder von weiteren Hafteigenschaften der Oberfläche abhängen. Durch die Erfassung der für die Ablösung der Abformung notwendigen Zugkraft, die auf den Druckstempel ausgeübt werden muss, können zusätzliche Informationen zu diesen Eigenschaften der Oberfläche ermittelt werden, die sich auf die für das Ablösen erforderliche Zugkraft auswirken.

Einer besonders vorteilhaften Ausgestaltung des Erfindungsgedankens zufolge ist vorgesehen, dass vor oder während des Abformschritts ein Verformungskörper an die Oberfläche angepresst wird und eine Verformung der Oberfläche bewirkt, die von dem Abformrohling abgeformt wird. Der Verformungskörper kann beispielsweise ein Stift, ein Konus oder eine Spitze sein, der in die Oberfläche eingedrückt wird und dadurch die Topografie der Oberfläche verändert. Diese Veränderung der Topografie ist abhängig von der Formgebung des Verformungskörpers, von dem Anpressdruck, mit welchem der Verformungskörper in die Oberfläche eingedrückt wird, aber auch von den Eigenschaften der Oberfläche bzw. des Objekts mit dieser Oberfläche. Bei dem Andrücken des Abformrohlings passt sich die Abformschicht aus dem Polymermaterial an die veränderte Topografie der Oberfläche an, die nach dem Aushärten des Polymermaterials abgeformt wird und dadurch mit nachfolgenden Untersuchungen und Messungen erfasst und ausgewertet werden kann.

Der Verformungskörper kann während des Abformschritts in die Oberfläche eingedrückt werden und für die Dauer der Aushärtung des Polymermaterials eine Verformungskraft auf die Oberfläche ausüben. In diesem Fall können auch Eigenschaften der Oberfläche eines nachgiebigen oder elastischen Materials untersucht werden, dessen Oberfläche sich nach einer Entfernung des Verformungskörpers wieder zurückverformen würde und gegebenenfalls wieder die ursprüngliche Formgebung und Eigenschaften vor der Einwirkung des Verformungskörpers annehmen würde.

Der Verformungskörper kann auch vor dem Abformschritt und gegebenenfalls sogar Andrückschritt an die Oberfläche angepresst werden, um eine bleibende Verformung der Oberfläche zu erzeugen. Diese Verformung wird bei dem nachfolgenden Abformschritt auf die Abformung übertragen und kann anschließend nach der Ablösung der Abformung von der verformten Oberfläche untersucht und ausgewertet werden. Mit einem derartigen Verfahren kann beispielsweise die Härte eines Objekts in einem Bereich an der von der Abformung erfassten Oberfläche ermittelt werden.

Es ist ebenfalls möglich, dass der Verformungskörper nicht senkrecht zur Oberfläche verlagert und in die Oberfläche eingedrückt wird, sondern mit dem Verformungskörper eine in einem spitzen oder stumpfen Winkel zu der Oberfläche gerichtete Krafteinwirkung auf die Oberfläche bzw. auf das Objekt mit der Oberfläche erzeugt wird, die zu einer charakteristischen Veränderung der Topografie der Oberfläche führen kann. Auf diese Weise können beispielsweise Kratzspuren für Härtebestimmungen erzeugt oder Untersuchungen zu einem künstlich erzeugten Verschleiß der Oberfläche durchgeführt werden.

Nachfolgend werden Ausführungsbeispiele des Erfindungsgedankens näher erläutert, die exemplarisch in der Zeichnung dargestellt sind. Es zeigt:
Fig. 1 eine schematische Darstellung einer erfindungsgemäßen Vorrichtung zur Erzeugung einer Abformung mit einem Abformrohling, wobei der Abformrohling an einem Druckstempel festgelegt ist und der Druckstempel sich noch in einem Abstand zu der abzuformenden Oberfläche befindet,
Fig. 2 eine schematische Darstellung der in Fig. 1 gezeigten Vorrichtung, wobei der Druckstempel mit dem daran festgelegten Abformrohling an die Oberfläche angedrückt wird,
Fig. 3 eine vergrößert dargestellte schematische Abbildung eines Teilbereichs der Vorrichtung mit einem schwenkbar gelagerten Rohlingträger,
Fig. 4 eine Abbildung gemäß Fig. 3, wobei der Rohlingträger abweichend ausgestaltet und aus drei jeweils relativ zueinander verlagerbaren Andrucksegmenten gebildet ist,
Fig. 5 eine schematische Schnittansicht eines in einer Schutzhülle befindlichen Abformrohlings,
Fig. 6 bis Fig. 8 eine schematische Darstellung mehrerer Verfahrensschritte eines Verfahrensablaufs, bei dem eine Abformung der Oberfläche erzeugt und anschließend mit einem Rastersondenmikroskop analysiert wird,
Fig. 9 eine schematische Darstellung einer erfindungsgemäßen Vorrichtung mit einer Kraftmesseinrichtung,
Fig. 10 eine schematische Darstellung einer erfindungsgemäßen Vorrichtung, die einen längs der Führungsstange verlagerbaren Verformungskörper aufweist, der mittig durch einen ringförmigen Abformrohling hindurch an die Oberfläche angepresst werden kann,
Fig. 11 eine schematische Darstellung der in Fig. 10 gezeigten Vorrichtung, wobei während der Erzeugung der Abformung der Verformungskörper in die Oberfläche eingedrückt wird und diese dadurch verformt, und
Fig. 12 eine schematische Darstellung der in den Fig. 10 und 11 gezeigten Vorrichtung, wobei vor der Erzeugung der Abformung der Verformungskörper in die Oberfläche eingedrückt wurde und eine bleibende Verformung der Oberfläche bewirkt hat, und der Verformungskörper während der Erzeugung der Abformung in den Rohlingträger zurückgezogen ist.

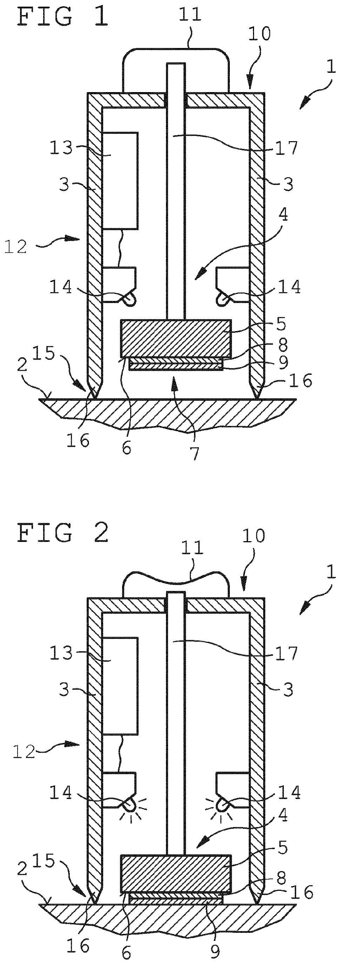

In den Fig. 1 und 2 ist jeweils eine Vorrichtung 1 zum Erzeugen einer Abformung dargestellt, die auf einer abzuformenden Oberfläche 2 aufgestellt ist. In einem Gehäuse 3 ist ein Druckstempel 4 in einer nicht näher dargestellten Druckstempelführung in Richtung der Oberfläche 2 verlagerbar gelagert.

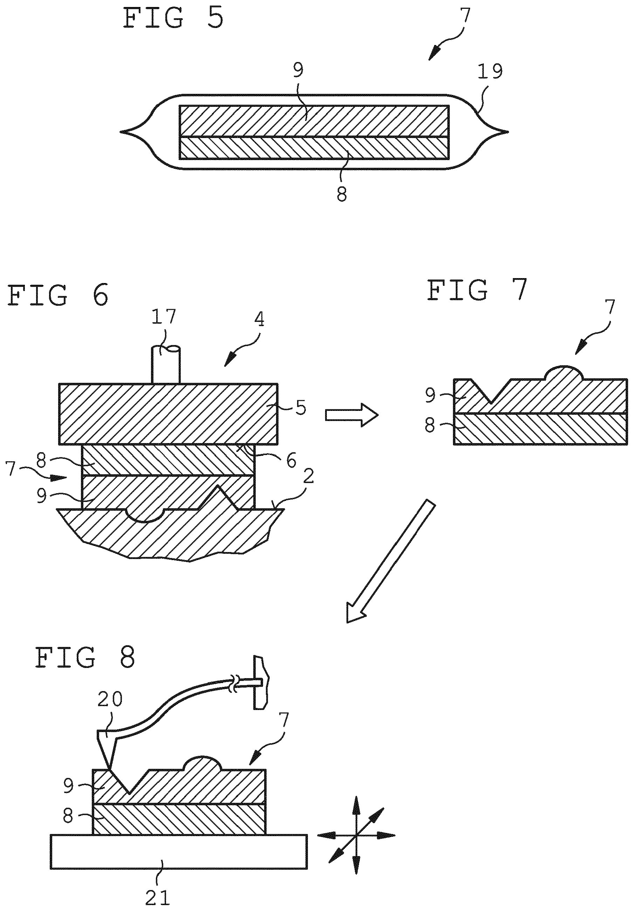

Der Druckstempel 4 weist an seinem der Oberfläche 2 zugewandten Ende einen Rohlingträger 5 auf, dessen der Oberfläche 2 zugewandte Oberseite eine Druckfläche 6 bildet. Auf der Druckfläche 6 des Rohlingträgers 5 ist ein in Fig. 5 gesondert dargestellter Abformrohling 7 mittels einer Kleberschicht wieder ablösbar festgelegt. Der Abformrohling 7 weist eine formstabile Trägerschicht 8 und eine darauf aufgebrachte Abformschicht 9 aus einem aushärtbaren vernetzenden Polymermaterial auf.

Die Abformschicht 9 ist zunächst noch nicht ausgehärtet und weist pastöse Eigenschaften auf. Durch die Betätigung eines an einer Stirnseite 10 des Gehäuses 3 angeordneten und mit dem Druckstempel 4 in Wirkverbindung stehenden Druckknopfs 11 kann der Druckstempel 4 aus einer in Fig. 1 gezeigten Rüstposition, in welcher der Abformrohling 7 auf der Druckfläche 6 des Rohlingträgers 5 befestigt und anschließend das Gehäuse 3 auf der Oberfläche 2 positioniert werden kann, in eine in Fig. 2 gezeigte Andruckposition verlagert werden, in welcher der Druckstempel 4 mit dem daran festgelegten Abformrohling 7 auf die Oberfläche 2 angedrückt wird.

In dem Gehäuse 3 der Vorrichtung 1 ist eine Aushärteinrichtung 12 angeordnet, die über eine Steuer- und Energieversorgungseinrichtung 13 mit elektrischer Energie versorgt und gesteuert wird. Die Aushärteinrichtung 12 weist mehrere konzentrisch um den Druckstempel 4 an einer Innenwand des Gehäuses 3 angeordnete UV-Leuchtdioden 14 auf. Die UV-Leuchtdioden 14 strahlen im eingeschalteten Zustand UV-Licht in Richtung des Abformrohlings 7. Durch das UV-Licht der UV-Leuchtdioden 14 wird eine Vernetzung und Aushärtung des aushärtbaren Polymermaterials der Abformschicht 9 des Abformrohlings 7 aktiviert und beschleunigt.

Wenn der Druckstempel 4 mit dem daran befestigten Abformrohling 7 an die abzuformende Oberfläche 2 angedrückt wird, verformt sich die noch nicht ausgehärtete Abformschicht 9 und bildet eine Matrize, bzw. eine Negativform der Oberflächentopographie der Oberfläche 2. Die UV-Leuchtdioden 14 können automatisch bei einer Verlagerung des Druckstempels 4 zur Oberfläche 2 hin oder manuell durch eine nicht näher dargestellte Einschalteinrichtung eingeschaltet werden, um die an die Oberflächentopographie der Oberfläche 2 angepasste Abformschicht 9 auszuhärten und die dadurch erzeugte Abformung dauerhaft zu konservieren. Um den Aushärtevorgang zu beschleunigen kann der Rohlingträger 5 aus einem UVdurchlässigen Material bestehen, so dass die von den UV-Leuchtdioden emittierte UV-Strahlung den Abformrohling 8 und die Abformschicht 9 beleuchten kann.

Um eine Positionierung und Fixierung des Gehäuses 3 auf der Oberfläche 2 zu erleichtern weist das Gehäuse 3 an einem unteren Gehäuserand 15 drei beabstandet zueinander angeordnete konisch zulaufende Aufstandsspitzen 16 auf. Die Aufstandsspitzen 16 ermöglichen ein kippfreies Aufstellen des Gehäuses 3 auf der Oberfläche 2 und reduzieren die Gefahr einer unerwünschten seitlichen Verschiebung des Gehäuses 3 auf der Oberfläche 2.

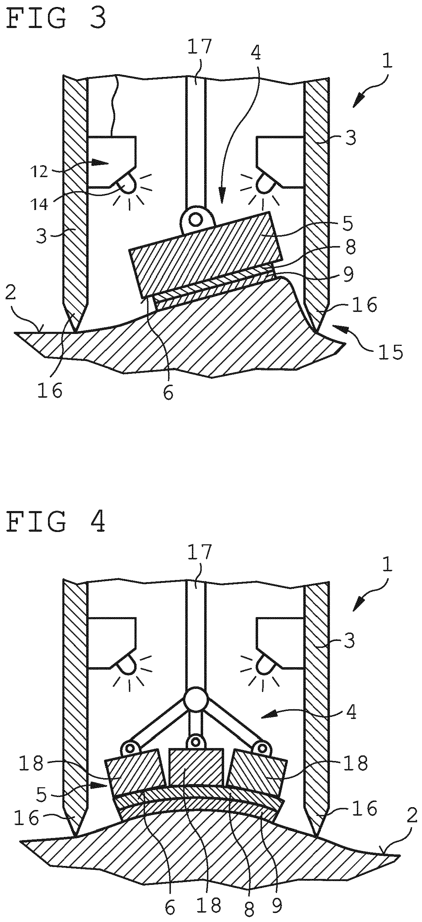

In Fig. 3 und Fig. 4 sind Varianten der Vorrichtung 1 mit einem jeweils abweichend ausgestalteten Druckstempel 4 schematisch dargestellt. Bei dem in Fig. 3 gezeigten Ausführungsbeispiel ist der Rohlingträger 5 schwenkbar an einer linear verlagerbaren Führungsstange 17 des Druckstempels 4 gelagert. Die Ausrichtung des Rohlingträgers 5 kann sich dadurch in einfacher Weise an eine unebene bzw. schräg verlaufende Oberfläche 2 anpassen.

Bei dem in Fig. 4 gezeigten Ausführungsbeispiel weist der Rohlingträger 5 drei jeweils unabhängig voneinander schwenkbar gelagerte Andrucksegmente 18 auf, die gemeinsam die Druckfläche 6 des Druckstempels 4 bilden, an welcher der Abformrohling 7 festgelegt werden kann, um mit dem Druckstempel 4 an die Oberfläche 2 angedrückt zu werden. Durch die relativ zueinander verlagerbaren Andrucksegmente 18 kann die Abformschicht 9 des Abformrohlings 7 auch an eine gekrümmte Oberfläche 2 oder an eine unebene Oberfläche 2 angepasst und mit einem weitgehend konstanten Anpressdruck angedrückt werden.

Der in Fig. 5 gesondert und in vergrößerter Darstellung abgebildete Abformrohling 7 besteht aus der formstabilen Trägerschicht 8 und der zunächst noch pastösen Abformschicht 9 aus dem vernetzenden Polymermaterial, das durch UV-Licht ausgehärtet werden kann. Der Abformrohling 7 ist ein Verbrauchsmaterial und kann zum Schutz vor dem Aushärten der Abformschicht 9 sowie vor einer Beschädigung des Abformrohlings 7 während dessen Lagerung vor seiner Benutzung mit einer lichtdichten und insbesondere UVdichten Umhüllung 19 umgeben, bzw. darin verpackt sein.

In den Fig. 6 bis 8 sind einzelne Verfahrensschritte exemplarisch und schematisch dargestellt, die für eine Oberflächenanalyse mit dem erfindungsgemäßen Verfahren durchgeführt werden können. Der Abformrohling 7 wird in einem in Fig. 6 gezeigten Andrückschritt mit dem Druckstempel 4, bzw. von dem Rohlingträger 5 des Druckstempels 4 mit der Vorrichtung 1 an die zu untersuchende Oberfläche 2 angedrückt, so dass sich das noch verformbare Material der Abformschicht 9 des Abformrohlings 7 an die Oberflächentopographie der Oberfläche 2 anpasst. Das Material der Abformschicht 9 wird in einem Abformschritt anschließend durch eine Bestrahlung mit UV-Licht ausgehärtet. Nach einem in einem Entnahmeschritt erfolgenden Ablösen des verformten und verfestigten Abformrohlings 7 von der Oberfläche 2 und anschließend von dem Rohlingträger 5 bildet die in Fig. 7 gezeigte verformte Abformschicht 9 eine Matrize der Oberflächentopographie. An Stelle oder zusätzlich zu der Oberflächentopographie kann das Material der Abformschicht 9 auch durch andere Eigenschaften der zu analysierenden Oberfläche 2 wie beispielsweise deren magnetische Eigenschaften, deren Hydrophobizität oder deren chemische Eigenschaften beeinflusst worden sein, so dass durch eine anschließende Analyse des verfestigten Abformrohlings 7 diese auf den Abformrohling 7 übertragenen oder darauf einwirkenden Eigenschaften mit geeigneten Messverfahren und Messvorrichtungen analysiert werden können. In Fig. 8 ist exemplarisch die Analyse der Oberflächentopographie mit Hilfe einer Sonde 20 eines Rastersondenmikroskops dargestellt. Zu diesem Zweck kann der die Matrize bildende verfestigte Abformrohling 7 auf einem Messtisch 21 des nicht näher dargestellten Rastersondenmikroskops angeordnet werden. Auch räumlich schwer zugängliche Oberflächen 2 oder sich zeitlich verändernde Oberflächen 2, bzw. Oberflächeneigenschaften können durch die erfindungsgemäße Abformung mit geringem Aufwand, zuverlässig und reproduzierbar analysiert werden.

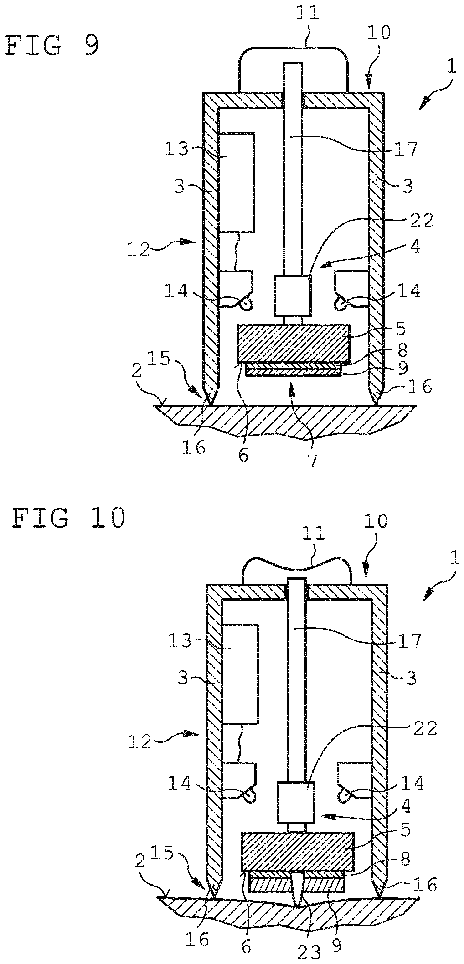

Bei der in Fig. 9 exemplarisch dargestellten Ausgestaltung der Vorrichtung 1 ist an der Führungsstange 17 in der Nähe des Rohlingträgers 5 eine Kraftmesseinrichtung 22 angeordnet. Die Kraftmesseinrichtung 22 kann beispielsweise ein verformungssensitives Piezoelement oder eine Dehnungsmessstreifenanordnung enthalten. Mit der Kraftmesseinrichtung 22 kann während des Andrückens des Druckstempels 4 an die Oberfläche 2 die auf den Abformrohling 7 ausgeübte Andruckkraft erfasst werden. In gleicher Weise kann mit der Kraftmesseinrichtung 22 auch die Zugkraft erfasst werden, die aufgebracht wird, um den ausgehärteten Abformrohling 7, also die erzeugte Abformung von der Oberfläche 2 wieder zu lösen.

Die Kraftmesseinrichtung 22 kann drahtgebunden oder drahtlos mit einer nicht dargestellten Auswerteeinrichtung verbunden sein. Die mit der Kraftmesseinrichtung 22 erfassten Messsignale können bereits während der Erzeugung der Abformung ausgewertet werden und beispielsweise dazu verwendet werden, eine optische oder akustische Anzeige zu erzeugen, sobald ein ausreichender Anpressdruck erreicht ist, oder falls während der Erzeugung der Abformung der Anpressdruck übermäßig abfällt oder variiert. Die mit der Kraftmesseinrichtung 22 erzeugten Messsignale können auch in der Auswerteeinrichtung zunächst gespeichert und für eine nachträgliche Auswertung oder Bearbeitung aller über die Abformung erzeugten Informationen bereit gehalten werden.

Die in Fig. 10 exemplarisch dargestellte Ausführungsvariante der Vorrichtung 1 weist einen sich konisch verjüngenden Verformungskörper 23 auf, der in der Führungsstange 17 bzw. in dem Rohlingträger 5 verschiebbar gelagert ist. Mit einer nicht dargestellten Betätigungseinrichtung kann eine ebenfalls nicht gesondert dargestellte Verlagerungseinrichtung, beispielsweise eine Federeinrichtung oder ein Elektromotor, betätigt und der Verformungskörper 23 in die Oberfläche 2 eingedrückt werden, um eine Veränderung der Topografie der Oberfläche 2 zu bewirken. Der Abformrohling 7 ist ringförmig ausgestaltet und umgibt den Verformungskörper 23, der durch eine mittige Ausnehmung des Abformrohlings 7 hindurch in die Oberfläche 2 eingedrückt wird.

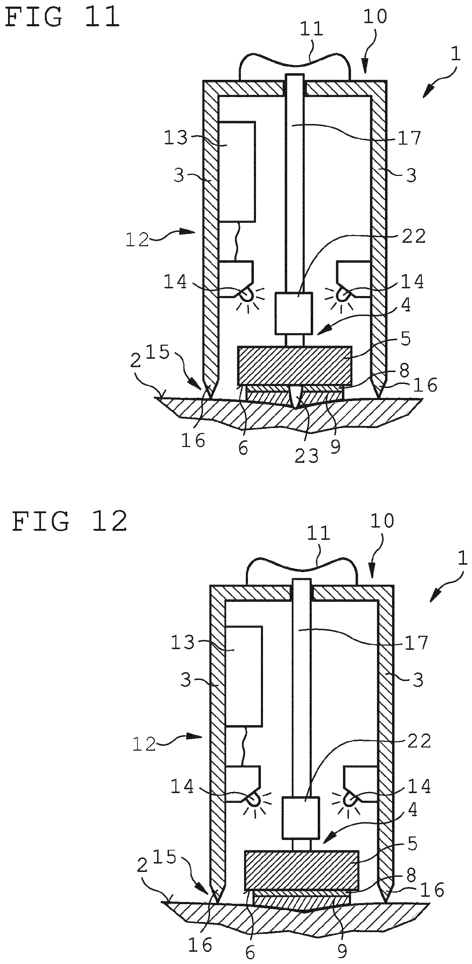

In Fig. 11 wird eine mögliche Verwendung der Vorrichtung 1 während der Erzeugung der Abformung dargestellt. Der Verformungskörper 23 wird zusammen mit dem Abformrohling 7 an die Oberfläche 2 angedrückt. Dadurch kann beispielsweise auch in einem elastischen Material mit einer nachgiebigen Oberfläche 2 eine für die Dauer der Abformung gleichbleibende Veränderung der Topografie der Oberfläche 2 bewirkt werden, die mit der Abformung erfasst und anschließend ausgewertet werden kann.

Es ist ebenfalls möglich, zuerst mit dem Verformungskörper 23 eine dauerhafte Veränderung der Topografie der Oberfläche 2 zu erzeugen und den Verformungskörper 23 danach wieder in den Rohlingträger 5 zurückzuziehen, bevor anschließend der Druckstempel 4 mit dem Abformrohling 7 an die zuvor veränderte Oberfläche 2 angedrückt wird, um die Abformung zu erzeugen. Bei dem in Fig. 12 dargestellten Ausführungsbeispiel wird exemplarisch die Erzeugung einer Abformung nach einer vorausgehenden Verformung der Oberfläche 2 mit dem Verformungskörper 23 gezeigt.

## Patentansprüche

1. Vorrichtung (1) zum Erzeugen einer Abformung einer Oberflächeneigenschaft mit einem Gehäuse (3), mit einem an oder in dem Gehäuse (3) gelagerten verlagerbaren und auf eine Oberfläche (2) andrückbaren Druckstempel (4), der einen Rohlingträger (5) mit einer an eine Oberfläche (2) andrückbaren Druckfläche (6) aufweist, an der ein Abformrohling (7) mit einer Abformschicht (9) aus einem aushärtbaren Material lösbar festlegbar ist, und mit einer an oder in dem Gehäuse (3) angeordneten Aushärteinrichtung (12), mit welcher das aushärtbare Material des Abformrohlings (7) während des Andrückens an die Oberfläche (2) ausgehärtet werden kann, **dadurch gekennzeichnet, dass** die Vorrichtung zum Erzeugen einer Abformung auf einer abzuformenden Oberfläche aufstellbar ist, und dass das Gehäuse für eine manuelle Verwendung und Handhabung angepasst ist.

2. Vorrichtung (1) nach Anspruch 1, **dadurch gekennzeichnet, dass** der Rohlingträger (5) schwenkbar gelagert ist.

3. Vorrichtung (1) nach Anspruch 1 oder Anspruch 2, **dadurch gekennzeichnet, dass** der Rohlingträger (5) mindestens zwei relativ zueinander verlagerbare Andrucksegmente (18) aufweist.

4. Vorrichtung (1) nach einem der vorangehenden Ansprüche, **dadurch gekennzeichnet, dass** die Vorrichtung (1) eine Positioniereinrichtung für den verlagerbaren Druckstempel (4) aufweist.

5. Vorrichtung (1) nach einem der vorangehenden Ansprüche, **dadurch gekennzeichnet, dass** die Vorrichtung (1) eine Kraftmesseinrichtung (22) aufweist, mit welcher eine auf den Druckstempel ausgeübte Zugkraft oder Druckkraft erfasst werden kann.

6. Vorrichtung (1) nach Anspruch 5, **dadurch gekennzeichnet, dass** die Kraftmesseinrichtung (22) an einer Führungsstange (17) des Druckstempels (4) angeordnet ist.

7. Vorrichtung (1) nach einem der vorangehenden Ansprüche, **dadurch gekennzeichnet, dass** die Vorrichtung einen mit einer Verlagerungseinrichtung gelagerten Verformungskörper (23) aufweist, der durch eine Betätigungseinrichtung an die Oberfläche (2) angepresst werden kann, um eine Verformung der Oberfläche (2) zu bewirken.

8. Vorrichtung (1) nach Anspruch 7, **dadurch gekennzeichnet, dass** der Verformungskörper (23) in dem Rohlingträger (5) zwischen einer aus dem Rohlingträger (5) über die Druckfläche (6) herausragenden Anpressposition und einer in den Rohlingträger (5) zurückgezogenen, nicht über die Druckfläche (6) herausragenden Ruheposition verlagerbar gelagert ist.

9. Vorrichtung (1) nach einem der vorangehenden Ansprüche, **dadurch gekennzeichnet, dass** die Aushärteinrichtung (12) eine Beleuchtungseinrichtung mit elektromagnetischer Strahlung aufweist.

10. Vorrichtung (1) nach Anspruch 9, **dadurch gekennzeichnet, dass** die Beleuchtungseinrichtung UV-Strahlung emittiert.

11. Vorrichtung (1) nach einem der vorangehenden Ansprüche, **dadurch gekennzeichnet, dass** die Druckfläche (6) des Rohlingträgers (5) eine Haftschicht für die lösbare Festlegung des Abformrohlings (7) aufweist.

12. Verfahren zum Erzeugen einer Abformung einer Oberflächeneigenschaft, wobei mit einer in den Patentansprüchen 1 bis 11 beschriebenen Vorrichtung in einem Andrückschritt ein Abformrohling (7) mit einer Abformschicht (9) aus einem aushärtbaren Material auf einer Druckfläche (6) eines Druckstempel (4) festgelegt und mit dem Druckstempel (6) an einer Oberfläche (2) angedrückt wird, wobei in einem Abformschritt mit einer Aushärteinrichtung (12) das aushärtbare Material der Abformschicht (9) während des Andrückens ausgehärtet wird, und wobei in einem Entnahmeschritt der Abformrohling (7) mit der ausgehärteten Abformung der Oberfläche (2) von dem Druckstempel (4) gelöst wird.

13. Verfahren nach Anspruch 12, **dadurch gekennzeichnet, dass** das aushärtbare Material der Abformschicht (7) ein mit elektromagnetischer Strahlung aktivierbares vernetzendes Polymer ist und dass in dem Abformschritt das vernetzende Polymer mit einer Beleuchtungseinrichtung mit elektromagnetischer Strahlung bestrahlt wird.

14. Verfahren nach Anspruch 13, **dadurch gekennzeichnet, dass** das aushärtbare Material der Abformschicht (9) mit UV-Strahlung bestrahlt wird.

15. Verfahren nach einem der Ansprüche 12 bis 14, **dadurch gekennzeichnet, dass** während des Andrückschritts mit einer Kraftmesseinrichtung (22) eine auf den Druckstempel (4) ausgeübte Druckkraft erfasst wird.

16. Verfahren nach einem der Ansprüche 12 bis 15, **dadurch gekennzeichnet, dass** mit einer Kraftmesseinrichtung (22) eine Zugkraft erfasst wird, die auf den Abformrohling (7) ausgeübt wird, während der Abformrohling (7) mit der ausgehärteten Abformung von der Oberfläche (2) gelöst wird.

17. Verfahren nach einem der Ansprüche 12 bis 16, **dadurch gekennzeichnet, dass** vor oder während des Abformschritts ein Verformungskörper (23) an die Oberfläche (2) angepresst wird und eine Verformung der Oberfläche (2) bewirkt, die von dem Abformrohling (7) abgeformt wird.

## Claims

1. Device (1) for producing an impression of a surface feature, comprising a housing (3), comprising a displaceable punch (4) which is mounted on or in the housing (3) and can be pressed onto a surface (2), said punch comprising a blank carrier (5) having a pressure surface (6) which can be pressed onto a surface (2) and on which an impression blank (7) having an impression layer (9) of a curable material can be detachably fixed, and comprising a curing means (12) which is arranged on or in the housing (3) and by means of which the curable material of the impression blank (7) can be cured during the pressing onto the surface (2), **characterised in that** the device for producing an impression can be set up on a surface of which an impression is to be made, and **in that** the housing is adapted for manual use and handling.

2. Device (1) according to claim 1, **characterised in that** the blank carrier (5) is pivotably mounted.

3. Device (1) according to either claim 1 or claim 2, **characterised in that** the blank carrier (5) comprises at least two pressing segments (18) which are displaceable relative to one another.

4. Device (1) according to any of the preceding claims, **characterised in that** the device (1) comprises a positioning means for the displaceable punch (4).

5. Device (1) according to any of the preceding claims, **characterised in that** the device (1) comprises a force measuring device (22), by means of which tensile force or compressive force exerted on the punch can be recorded.

6. Device (1) according to claim 5, **characterised in that** the force measuring device (22) is arranged on a guide rod (17) of the punch (4).

7. Device (1) according to any of the preceding claims, **characterised in that** the device comprises a deformation member (23) which is mounted with a displacement means and which can be pressed onto the surface (2) by an actuation means, in order to bring about a deformation of the surface (2) .

8. Device (1) according to claim 7, **characterised in that** the deformation member (23) is mounted in the blank carrier (7) so as to be displaceable between a pressing position protruding from the blank carrier (5), beyond the pressure surface (6), and an idle position retracted into the blank carrier (5) and not protruding beyond the pressure surface (6) .

9. Device (1) according to any of the preceding claims, **characterised in that** the curing means (12) comprises an illumination means having electromagnetic radiation.

10. Device (1) according to claim 9, **characterised in that** the illumination means emits UV radiation.

11. Device (1) according to any of the preceding claims, **characterised in that** the pressure surface (6) of the blank carrier (5) has an adhesive layer for detachable fixing of the impression blank (7).

12. Method for producing an impression of a surface feature, wherein, using a device described in claims 1 to 11, in a pressing step, an impression blank (7) comprising an impression layer (9) made of a curable material is fixed on a pressure surface (6) of a punch (4) and pressed on a surface (2) by means of the punch (6), wherein in an impression step the curable material of the impression layer (9) is cured, during the pressing, by a curing means (12), and wherein, in a removal step, the impression blank (7) together with the cured impression of the surface (2) is released from the punch (4).

13. Method according to claim 12, **characterised in that** the curable material of the impression layer (7) is a cross-linking polymer activatable by electromagnetic radiation, and **in that**, in the impression layer, the cross-linking polymer is irradiated with electromagnetic radiation, using an illumination means.

14. Method according to claim 13, **characterised in that** the curable material of the impression layer (9) is irradiated with UV radiation.

15. Method according to any of claims 12 to 14, **characterised in that**, during the pressing step, a compressive force exerted on the punch (4) is recorded by a force measuring device (22).

16. Method according to any of claims 12 to 15, **characterised in that** a tensile force is recorded by a force measuring device, which tensile force is exerted on the impression blank (7), while the impression blank (7), together with the cured impression, is released from the surface (2).

17. Method according to any of claims 12 to 16, **characterised in that**, before or during the impression step, a deformation member (23) is pressed onto the surface (2) and brings about a deformation of the surface (2), of which an impression is made by the impression blank (7).

## Revendications

1. Dispositif (1) pour produire une empreinte d'une propriété de surface avec un boîtier (3), avec un vérin presseur (4) monté sur ou dans le boîtier (3), déplaçable et pouvant être pressé contre une surface (2), qui présente un support d'ébauche (5) avec une surface de pression pouvant être pressée contre une surface (2), sur laquelle une ébauche d'empreinte (7) avec une couche d'empreinte (9) en un matériau durcissable peut être fixée de manière amovible, et avec un appareil de durcissement (12) agencé sur ou dans le boîtier (3), avec lequel le matériau durcissable de l'ébauche d'empreinte (7) peut être durci pendant la pression sur la surface (2), **caractérisé en ce que** le dispositif peut être placé sur une surface dont l'empreinte doit être prise pour produire une empreinte, et **en ce que** le boîtier est adapté pour une utilisation et une manipulation manuelles.

2. Dispositif (1) selon la revendication 1, **caractérisé en ce que** le support d'ébauche (5) est monté pivotant.

3. Dispositif (1) selon la revendication 1 ou la revendication 2, **caractérisé en ce que** le support d'ébauche (5) présente au moins deux segments de pression (18) déplaçables l'un par rapport à l'autre.

4. Dispositif (1) selon l'une quelconque des revendications précédentes, **caractérisé en ce que** le dispositif (1) présente un appareil de positionnement pour le vérin presseur (4) déplaçable.

5. Dispositif (1) selon l'une quelconque des revendications précédentes, **caractérisé en ce que** le dispositif (1) présente un appareil de mesure de force (22) permettant de détecter une force de traction ou une force de pression exercée sur le vérin presseur.

6. Dispositif (1) selon la revendication 5, **caractérisé en ce que** l'appareil de mesure de force (22) est agencé sur une tige de guidage (17) du vérin presseur (4).

7. Dispositif (1) selon l'une quelconque des revendications précédentes, **caractérisé en ce que** le dispositif présente un corps de déformation (23) monté avec un appareil de déplacement, qui peut être pressé contre la surface (2) par un appareil d'actionnement pour provoquer une déformation de la surface (2).

8. Dispositif (1) selon la revendication 7, **caractérisé en ce que** le corps de déformation (23) est monté dans le support d'ébauche (5) de manière à pouvoir être déplacé entre une position de pression dépassant du support d'ébauche (5) au-dessus de la surface de pression (6) et une position de repos rétractée dans le support d'ébauche (5), ne dépassant pas de la surface de pression (6).

9. Dispositif (1) selon l'une quelconque des revendications précédentes, **caractérisé en ce que** l'appareil de durcissement (12) présente un appareil d'éclairage avec rayonnement électromagnétique.

10. Dispositif (1) selon la revendication 9, **caractérisé en ce que** l'appareil d'éclairage émet un rayonnement UV.

11. Dispositif (1) selon l'une quelconque des revendications précédentes, **caractérisé en ce que** la surface de pression (6) du support d'ébauche (5) présente une couche adhésive pour la fixation amovible de l'ébauche d'empreinte (7).

12. Procédé de production d'une empreinte d'une propriété de surface, dans lequel, avec un dispositif décrit dans les revendications 1 à 11, dans une étape de pression, une ébauche d'empreinte (7) avec une couche d'empreinte (9) en un matériau durcissable est fixée sur une surface de pression (6) d'un vérin presseur (4) et est pressée avec le vérin presseur (6) contre une surface (2), dans lequel le matériau durcissable de la couche d'empreinte (9) est durci dans une étape de prise d'empreinte avec un appareil de durcissement (12) pendant la pression, et dans lequel l'ébauche d'empreinte (7) avec l'empreinte durcie de la surface (2) est détachée du vérin presseur (4) dans une étape de retrait.

13. Procédé selon la revendication 12, **caractérisé en ce que** le matériau durcissable de la couche d'empreinte (7) est un polymère réticulant activable par un rayonnement électromagnétique et **en ce que**, dans l'étape de prise d'empreinte, le polymère réticulant est exposé à un rayonnement électromagnétique avec un appareil d'éclairage.

14. Procédé selon la revendication 13, **caractérisé en ce que** le matériau durcissable de la couche d'empreinte (9) est exposé à un rayonnement UV.

15. Procédé selon l'une quelconque des revendications 12 à 14, **caractérisé en ce que**, pendant l'étape de pression, une force de pression exercée sur le vérin presseur (4) est détectée avec un appareil de mesure de force (22).

16. Procédé selon l'une quelconque des revendications 12 à 15, **caractérisé en ce qu'**une force de traction exercée sur l'ébauche d'empreinte (7) est détectée avec un appareil de mesure de force (22) pendant que l'ébauche d'empreinte (7) est détachée de la surface (2) avec l'empreinte durcie.

17. Procédé selon l'une quelconque des revendications 12 à 16, **caractérisé en ce qu'**avant ou pendant l'étape de prise d'empreinte, un corps de déformation (23) est pressé contre la surface (2) et provoque une déformation de la surface (2), qui est prise d'empreinte par l'ébauche d'empreinte (7).
